**Europäisches Patentamt**

**European Patent Office**

**Office européen des brevets**

(19)

(11) Veröffentlichungsnummer: **0 245 594**
**B1**

(12) ## EUROPÄISCHE PATENTSCHRIFT

(45) Veröffentlichungstag der Patentschrift:
**08.11.89**

(51) Int. Cl.⁴: **B 60 R 13/06**, E 06 B 7/23

(21) Anmeldenummer: **87102754.6**

(22) Anmeldetag: **26.02.87**

(54) **Dichtung.**

(30) Priorität: **16.05.86 DE 3616661**

(43) Veröffentlichungstag der Anmeldung:
**19.11.87 Patentblatt 87/47**

(45) Bekanntmachung des Hinweises auf die Patenterteilung:
**08.11.89 Patentblatt 89/45**

(84) Benannte Vertragsstaaten:
**DE ES FR IT**

(56) Entgegenhaltungen:
**FR-A- 2 332 409**
**GB-A- 1 460 169**
**US-A- 3 371 445**

(73) Patentinhaber: **AUDI AG,**
**Auto-Union-Strasse 1 Postfach 220, D-8070 Ingolstadt**
**(DE)**

(72) Erfinder: **Mayerl, Helmut, Langstrasse 6,**
**D-8859 Lichtenau (DE)**

(74) Vertreter: **Engelhardt, Harald, Audi AG Postfach 2 20,**
**D-8070 Ingolstadt (DE)**

EP 0 245 594 B1

## Beschreibung

Die Erfindung betrifft eine Dichtung der im Gattungsbegriff des Patentanspruchs 1 angegebenen Art (siehe z. B. die B-A-1460169).

Bei solchen bekannten Dichtungen, insbesondere bei Dichtungsrahmen für Kraftfahrzeugtüren oder -klappen, ist es erforderlich, ggf. unterschiedliche Dichtungsabschnitte mit Hohlkammern durch ein Übergangsteil zu verbinden, damit ein geschlossener Dichtungsrahmen entsteht. Hinsichtlich der Elastizität, der Isolierwirkung und einer gewünschten Federungseigenschaft der Dichtung sollen die Hohlkammern der Dichtungsabschnitte auch im Übergangsteil fortgesetzt werden. Es sind deshalb innenliegende Kerne erforderlich, um beim Verbindung der Dichtungsabschnitte die Hohlkammern zu definieren. Nach dem Vulkanisieren des Rahmens lassen sich die innenliegenden Kerne jedoch nur mehr schwierig oder unter teilweiser Zerstörung der Dichtung entnehmen. Man ist deshalb in der Praxis dazu übergegangen, die Übergangsteile aus einem Moosgummi oder aus einem ähnlich eingestellten Elastomer zu bilden, um die Dichtungsabschnitte miteinander zu verbinden. Jedoch ist es schwierig, bei einem derartigen Übergangsteil die gleichen Federungs-, Dämpfungs- und Isoliereigenschaften zu erreichen wie sie die weiteren Abschnitte der Dichtung haben.

Der Erfindung liegt die Aufgabe zugrunde, eine Dichtung der eingangs genannten Art zu schaffen, bei der zum Verbinden der Dichtungsabschnitte benötigte Kerne auch nachträglich leicht entfernt werden können, und bei der im wesentlichen über die gesamte Dichtung die gleichen isolierenden, dämpfenden und federnden Eigenschaften vorliegen.

Die gestellte Aufgabe wird erfindungsgemäss mit den im kennzeichnenden Teil des Patentanspruchs 1 angegebenen Merkmalen gelöst.

Da das Übergangsteil als offene Hohlschale ausgebildet ist, die sich mit den Enden der angrenzenden Dichtungsabschnitte gut verbinden lässt, können die beim Verbinden unter Umständen gebrauchten innenliegenden Kerne danach leicht über die offene Seite des Übergangsteils entfernt werden. Der danach eingebrachte Deckel verschliesst das Übergangsteil derart, dass dies einen die Hohlkammern der Dichtungsabschnitte fortsetzenden Hohlraum enthält, der aber nach aussen abgeschlossen ist. Da das Übergangsteil aus dem gleichen Material hergestellt werden kann wie die angrenzenden Dichtungsabschnitte und weil die Hohlkammern ihre Fortsetzung im Hohlraum des Übergangsteils finden, liegen dann auch im Bereich des Übergangsteils die gleichen isolierenden, dämpfenden und federnden Eigenschaften vor wie in den angrenzenden Dichtungsabschnitten. Zudem wird eine unerwünschte Materialanhäufung im Bereich des Übergangsteils vermieden.

Bei einer zweckmässigen Ausführungsform sind die Merkmale von Anspruch 2 gegeben. Das Anvulkanisieren der Abschnittsenden kann mit innenliegenden Kernen erfolgen, die durch die offene Seite des Übergangsteils nachträglich leicht entfernbar sind. Innenliegende Kerne können aber auch beim Einspritzen des Übergangsteils zwischen die Abschnittsenden verwendet und nachträglich leicht entfernt werden. Auch zum Ankleben sind innenliegende Kerne günstig, weil sie die genaue Ausrichtung der Dichtungsabschnitte auf den Übergangsteil gestatten und nachträglich leicht entfernbar sind.

Zweckmässig ist ferner die Ausführungsform von Anspruch 3, weil die im Übergangsteil und im Deckel von vornherein vorgesehenen Elemente dann bei der Festlegung des Deckels zusammenwirken, derart, dass der Deckel sehr sicher die Öffnung des Übergangsteils verschliesst und auch leicht montierbar ist. Beim Einknüpfen wird die Elastizität des Materials des Übergangsteils dazu benutzt, den starren Deckel von allen Seiten festzuklammern. Zusätzlich kann der Deckel auch eingeklebt werden, damit er nachträglich nicht selbständig die Öffnung wieder freigibt.

Eine besonders praktische Ausführungsform geht aus Anspruch 4 hervor. Mit den Einsteckvertiefungen und der Haltenut lässt sich der Deckel mit wenigen Handgriffen sehr fest anbringen.

Eine weitere, vorteilhafte Ausführungsform einer Dichtung, die im Rahmenfalz eines Türrahmens einer Kraftfahrzeugkarosserie angebracht ist, geht aus Anspruch 5 hervor. Bei ordnungsgemäss montierter Dichtung ist an der freien Oberseite der Deckel nicht mehr sichtbar, sondern es wird über die gesamte Länge der Dichtung eine gleichmässig weiche, federnde und dämpfende Auflage gewährleistet. Die Hohlkammern stehen miteinander in Verbindung, so dass ein elastisches, isolierendes und dämpfendes Luftpolster innerhalb der Dichtung entsteht, das nicht in einzelne voneinander getrennte Abschnitte unterteilt zu sein braucht.

Vorteilhaft sind ferner die Merkmale von Anspruch 6, weil ein Kunststoffspritzteil oder ein Blechpressteil preiswert und formgenau herstellbar ist. Ein Kunststoffdeckel hat zudem den Vorteil, dass er dieselbe Farbe und Oberflächenstruktur haben kann wie die Dichtung, so dass der nachträglich eingesetzte Deckel von aussen her nicht mehr erkennbar ist oder stören könnte.

Eine weitere, vorteilhafte Ausführungsform des Erfindungsgegenstandes, bei dem die Dichtung mit Befestigungsnippeln ausgestattet ist, die in Haltevertiefungen im Rahmenfalz einsteckbar sind, geht aus Anspruch 7 hervor. Dem Deckel wird hier eine zusätzliche Funktion zugewiesen, weil er mit den angeformten Befestigungsnippeln zum Festlegen der Dichtung im Bereich des Übergangsteils eingesetzt wird.

Zweckmässigerweise sind dabei die Merkmale von Anspruch 8 gegeben.

Eine weitere, vorteilhafte Ausführungsform geht aus Anspruch 9 hervor. Zu den Rastnippeln gehören die Rasthülsen, die vermeiden, dass die verhältnismässig harten Rastnippel die Oberflächenbeschichtung oder Lackierung im Bereich der Einsteckvertiefungen abschaben könnten, wodurch spätere Rostansatzpunkte geschaffen würden. Da die Rasthülsen vor dem Eindrücken der Befestigungsnippel sehr leicht verformbar sind, lassen sie sich ohne Beschädigung beschichteter Oberflächen in die Einsteckvertiefungen einbringen. Erst wenn die Befestigungsnippel eingedrückt werden, sitzen sowohl die Befestigungsnippel als auch die Rasthülsen in den Haltevertiefungen fest. Müssen die Befestigungsnippel gelöst werden, so reiben sie zwar stark an der Innenseite der Rasthülsen; die Oberfläche der Rastvertiefung wird dadurch aber nicht beschädigt, weil nach dem Herausziehen des Haltenippels jede Rasthülse dank ihrer leichten Verformbarkeit sehr leicht aus der Rastvertiefung herausgenommen werden kann, wenn dies überhaupt erforderlich sein sollte.

Zweckmässig sind ferner die Merkmale von Anspruch 10, weil diese Rasthülsen sehr einfach und preiswert herstellbar sind und sich sehr leicht in die Haltevertiefungen einbringen lassen.

Die Halterung der Dichtung am Türrahmenfalz wird schliesslich mit dem Merkmal von Anspruch 11 verbessert, weil die Rasthülsen sich dann gut in der Haltevertiefung abstützen können, wenn sie durch die ebenfalls sicher abgestützten Befestigungsnippel aufgespreizt werden.

Ausführungsformen des Erfindungsgegenstandes werden nachstehend anhand der Zeichnung erläutert.

Es zeigt:

Fig. 1 eine schematische Ansicht einer Dichtung,

Fig. 2 einen vergrösserten Ausschnitt der Dichtung von Fig. 1,

Fig. 3 einen Querschnitt aus dem Ausschnitt von Fig. 2 in der Ebene III-III,

Fig. 4 einen Querschnitt durch eine praxisbezogene Ausführungsform, und

Fig. 5 ein vergrössertes Detail im Schnitt.

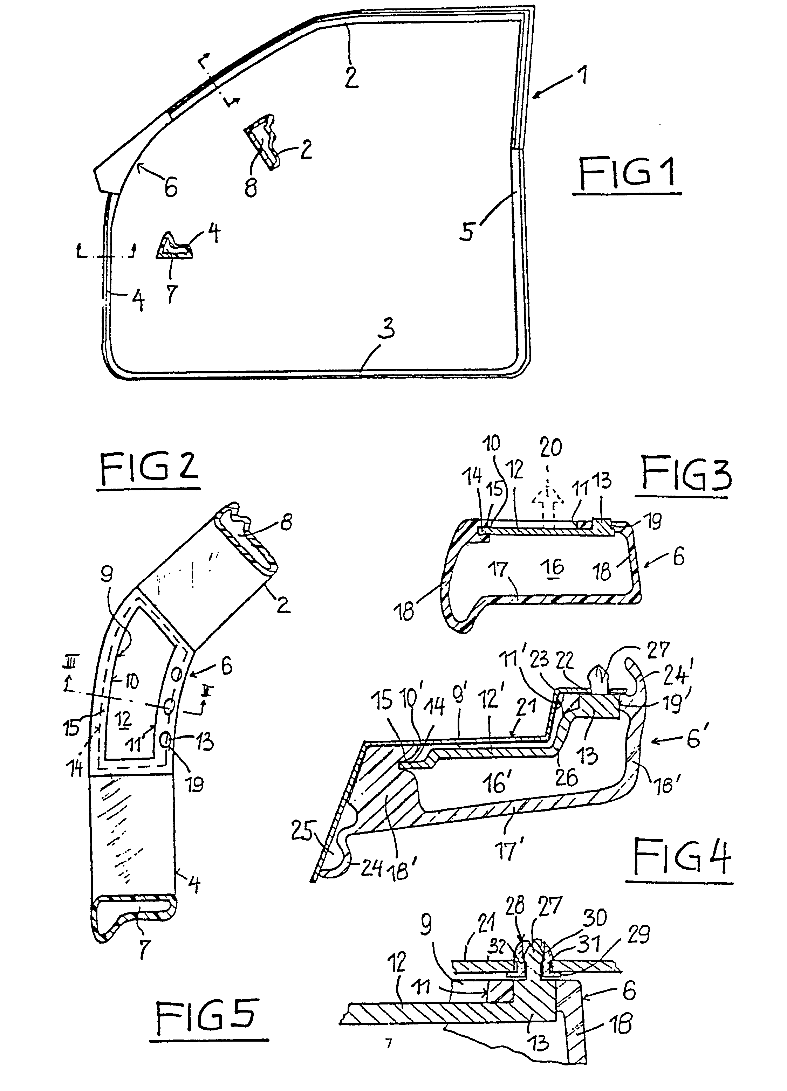

Aus Fig. 1 ist in einer Gesamtansicht eine Dichtung (1) aus Gummi oder einem Elastomer erkennbar, die aus Dichtungsabschnitten (2, 3, 4 und 5) mit ggf. unterschiedlicher Querschnittsform in üblicher Weise zusammengesetzt ist. Die Dichtung (1) dient als Dichtungsrahmen für eine Fahrzeugtür bei einem Kraftfahrzeug und wird (wie später erläutert) beispielsweise in den Türfalz eines Karosserieaufbaus eines Kraftfahrzeuges eingesetzt und daran befestigt. Der Dichtungsabschnitt (2) hat dann entweder den Türrahmen oder bei einer rahmenlosen Fensterscheibe die Fensterscheibe abzustützen und abzudichten; der Dichtungsabschnitt (3) dichtet den unteren Rand der Türe, bei dem von aussen auch Spritzwasser abzuweisen ist, ab, während die Dichtungsabschnitte (4) und (5) den Vorderteil und den hinteren Teil der Türe abzudichten haben. Zumindest die Dichtungsabschnitte (2) und (4) sind – wie in den Teilschnitten in Fig. 1 angedeutet ist – mit Hohlkammern (7) und (8) versehen, damit eine weiche, federnde, dämpfende und isolierende Auflage der Türe gewährleistet ist. Die Dichtungsabschnitte bestehen dabei üblicherweise aus extrudiertem Gummi oder Elastomer. Die Dichtungsabschnitte (2) und (4), die zudem winkelig aneinanderstossen, werden üblicherweise durch ein Übergangsteil (6) stoffschlüssig miteinander verbunden, bei dem dieselben federnden, dämpfenden und isolierenden Eigenschaften gegeben sein sollen wie im weiteren Erstreckungsbereich der Dichtung (1).

Aus Fig. 2, die das Übergangsteil (6) von Fig. 1 in vergrösserter Darstellung und mit Blickrichtung auf die Rückseite der Dichtung (1) zeigt, ist erkennbar, dass die Enden der Dichtungsabschnitte (2) und (4) stoffschlüssig mit dem Übergangsteil (6) verbunden sind, beispielsweise durch Vulkanisieren, Kleben oder dadurch, dass das Übergangsteil in einer Form zwischen die Dichtungsabschnitte (2) und (4) eingespritzt ist.

Fig. 3 ist ein Querschnitt in der Ebene III-III von Fig. 2 und verdeutlicht den Querschnitt im Übergangsteil (6). Das Übergangsteil (6) besitzt an einer Seite eine offene Öffnung (9) mit einem Randbereich (10) und einem gegenüberliegenden Randbereich (11). Die Öffnung (9) ist durch einen Deckel (12) verschlossen, der aus starrem Kunststoff oder aus Blech besteht. Der Deckel (12) besitzt an einer Seite einen flachen Randbereich (14), während an seinem gegenüberliegenden Randbereich z. B. zylindrische Vorsprünge (13) angeformt sind. Im Randbereich (10) der Öffnung (9) des Übergangsteils (6) ist eine zur Öffnung (9) hin offene Haltenut (15) eingeformt, die auch über den Abschnittenden benachbarte Öffnungsrandbereiche verläuft. Im Randbereich (11) der Öffnung (9) des Übergangsteils (6) sind hingegen Einsteckvertiefungen (19) ausgeformt.

Nachdem das Übergangsteil (6) zwischen den Dichtungsabschnitten (2) und (4) befestigt ist, werden die Vorsprünge (13) vom innenliegenden Hohlraum (16) des Übergangsteils (6) ausgehend in die Einsteckvertiefungen (19) hineingedrückt und danach die Haltenut (15) über den Randbereich (14) geknüpft, wobei die Elastizität des Übergangsteils (6) dieses Aufknüpfen gestattet und auch dafür sorgt, dass dann der Deckel (12) festgehalten wird. Die Hohlkammern (7) und (8) finden im Hohlraum (16) des Übergangsteils (6) ihre Fortsetzung. Sofern beim Verbinden der Dichtungsabschnitte (2) und (4) mit dem Übergangsteil (6) innenliegende Kerne eingesetzt werden, so lassen sich diese nach Herstellen der Verbindung einfach durch die Öffnung (9) entnehmen, ehe diese durch den Deckel (12) verschlossen wird.

In Fig. 3 ist angedeutet, dass der Deckel (12) eine zusätzliche Funktion dadurch erhält, dass er Halteelemente (20) trägt, mit denen die Dichtung (1) im Erstreckungsbereich des Übergangsteils (6) auf einfache Weise im Türfalz befestigt werden kann.

In den Fig. 1 bis 3 ist die Dichtung (1) mit ihren Details schematisch dargestellt. Fig. 4 zeigt einen Schnitt durch ein Übergangsteil (6') wie es den Anforderungen in der Praxis entspricht. Das Übergangsteil (6') ist im wesentlichen so aufgebaut, wie dies anhand der Fig. 2 und 3 erläutert wurde. Gleiche Teile sind mit den gleichen Bezugsziffern bzw. bei geringfügig anderer Ausbildung mit einem Apostroph bezeichnet.

Das Übergangsteil (6') ist in einem Türfalz (21) befestigt. Und zwar liegt das Übergangsteil (6') so im Türfalz (21), dass die Öffnung (9') mit dem darin angeordneten Deckel (12') dem Türfalz (21) unmittelbar zugewandt ist, während die Unterseite (17') des Übergangsteils (6') dem Türrahmen bzw. Fensterrahmen zugewandt liegt. Der Türfalz (21) wird von einem gebogenen Blech (23) gebildet, in dem in vorgeschriebenen Abständen Haltevertiefungen (22) angeordnet sind, deren Zweck später erläutert wird.

Die Seitenwand (18') ist mit einem breiten Querschnitt ausgebildet und läuft mit einer freien und sich am Türfalz (21) abstützenden Dichtlippe (24') aus, die einen Hohlraum (25) begrenzt. Der Deckel (12') ist in seinem Querschnitt doppelt abgekröpft (bei 26); zudem sind auf den Vorsprüngen (13) nach aussen ragende Befestigungsnippel (27) einstückig angeformt, die in die Haltevertiefungen (22) eingreifen und das Übergangsteil (6') im Türfalz (21) festlegen. Die Seitenwand (18) wird ebenfalls durch eine Dichtlippe (24') verlängert, die über den Rand des Türfalzes (21) überspringt. Der flache Rand (14) des Deckels (12') ist in die Haltenut (15) in der vorerwähnten Weise eingebracht. Die Vorsprünge (13) sitzen in den Einsteckvertiefungen (19') im Randbereich (11') der Öffnung (9') des Übergangsteils (6'). Der Deckel (12') ist wie auch der Deckel (12) aus starrem Kunststoff gefertigt.

Fig. 5 zeigt schliesslich im Detail die Befestigung mittels der die Haltevertiefungen (22) durchsetzenden Befestigungsnippel (27). Und zwar ist jeder Befestigungsnippel (27), der einstückig mit dem Vorsprung (13) des Deckels (12) verbunden ist, in eine Rasthülse (28) eingesteckt, die eine schützende Auskleidung für die Haltevertiefung (22) des Türfalzes (21) bildet. Die Rasthülse (28) besteht aus einem umlaufenden Auflagering (29), von dem in Umfangsrichtung beabstandete Halteschalen (30) wegstreben. Die Halteschalen (30) tragen aussenseitig und innenseitig Haltevorsprünge (31) und (32) derart, dass der verdickte Kopf des Befestigungsnippels (27) hinter die Haltevorsprünge (32) greift und gleichzeitig die aussenliegenden Haltevorsprünge (31) nach aussen drückt, so dass sich die Rasthülse (28) in der Haltevertiefung (22) verkeilt. Die Rasthülse (28) besteht aus starrem Kunststoff. Dank der Zwischenabstände zwischen den Halteschalen (30) lässt sie sich aber sehr leicht verformen, so lange der Befestigungsnippel (27) nicht eingedrückt ist. Aus diesem Grund wird die Innenwand der Haltevertiefung (22) durch das Eindrücken der Rasthülse (28) nicht beschädigt und trotzdem erreicht, dass sich beim Eindrücken des Befestigungsnippels (27) eine feste Halterung für den Deckel (12) und damit für das Übergangsteil (6) im Türfalz (21) ergibt.

Der Deckel (12) könnte in der Öffnung (9) des Übergangsteils (6) auch auf andere Weise nachträglich eingebracht werden, z. B. durch einfaches Auflegen und Festkleben oder durch umlaufende Haltenippel, die in Öffnungen des Deckels eingeknüpft werden.

**Patentansprüche**

1. Dichtung aus Gummi oder Elastomer, insbesondere Dichtungsrahmen für Kraftfahrzeugtüren oder -klappen, bei der wenigstens zwei in Längsrichtung verlaufende Hohlkammern (7, 8) aufweisende Dichtungsabschnitte durch ein Übergangsteil (6, 6') verbunden sind, das zwischen den Enden der Dichtungsabschnitte stoffschlüssig befestigt ist, dadurch gekennzeichnet, dass das Übergangsteil (6, 6') als einseitig offene Hohlschale aus Gummi oder Elastomer ausgebildet ist, dessen Hohlraum (16) durch einen lösbar angebrachten, steifen Deckel (12, 12') an der offenen Seite verschlossen ist.

2. Dichtung nach Anspruch 1, dadurch gekennzeichnet, dass das Übergangsteil (6, 6') an die Abschnittsenden (4, 2) anvulkanisiert, in situ angespritzt oder angeklebt ist.

3. Dichtung nach den Ansprüchen 1 und 2, dadurch gekennzeichnet, dass im Randbereich (10, 11) der Öffnung (9, 9') des Übergangsteils (6, 6') formschlüssige Halterungen für den Deckel (12, 12') eingeformt sind, und dass der Deckel (12, 12') in die Öffnung (9, 9') eingeknüpft und ggf. eingeklebt ist.

4. Dichtung nach Anspruch 3, dadurch gekennzeichnet, dass das Übergangsteil (6, 6') an einem Randbereich (10, 10') der Öffnung (9, 9') eine Haltenut (15) und am gegenüberliegenden Randbereich (11, 11') Einsteckvertiefungen (19, 19') aufweist, dass der Deckel (12, 12') einen flachen Randabschnitt (14) und am gegenüberliegenden Rand Vorsprünge (13) aufweist, und dass die Vorsprünge (13) des Deckels (12, 12') vom Hohlraum (16) des Übergangsteils (6, 6') ausgehend nach aussen in die Einsteckvertiefungen (19, 19') eingesteckt sind und dass die Haltenut (15) über den flachen Randabschnitt (14) geknüpft ist.

5. Dichtung nach einem der Ansprüche 1 bis 4, die im Rahmenfalz eines Türrahmens einer Kraftfahrzeugkarosserie angebracht ist, dadurch gekennzeichnet, dass der Deckel (12, 12') in der Seite des Übergangsteils (6, 6') angebracht ist, die gegen den Rahmenfalz (21) anliegt und ggf. an ihm befestigt ist.

6. Dichtung nach einem der Ansprüche 1 bis 5, dadurch gekennzeichnet, dass der Deckel (12, 12') aus einem harten Kunststoff oder aus Blech besteht.

7. Dichtung nach einem der Ansprüche 1 bis 6, wobei die Dichtung mit Befestigungsnippeln ausgestattet ist, die in Haltevertiefungen im Rahmenfalz einsteckbar sind, dadurch gekennzeichnet, dass die Befestigungsnippel (27) im Erstreckungsbereich des Übergangsteils (6, 6') am Deckel (12, 12') angeformt sind.

8. Dichtung nach Anspruch 7, dadurch gekennzeichnet, dass die Befestigungsnippel (27) aus dem Material des Deckels (12, 12') und mit diesem einstückig ausgeformt sind.

9. Dichtung nach einem der Ansprüche 1 bis 8, dadurch gekennzeichnet, dass jeder Befestigungsnippel (27) in der Haltevertiefung (22) mittels einer kragenartigen Rasthülse (28) verrastet ist, die eine vor dem Eindrücken des Befestigungsnippels (27) leicht verformbare Auskleidung für die Haltevertiefung (22) bildet.

10. Dichtung nach Anspruch 9, dadurch gekennzeichnet, dass die Rasthülse (28) aus einem starren Kunststoff geformt ist und aus einem Auflagering (29) mit daran angeformten Halteschalen (30) besteht, zwischen denen in Umfangsrichtung der Rasthülse (28) Zwischenabstände vorliegen, und dass die Rasthülse (28) unter zumindest teilweiser Verringerung der Abstände zwischen den Halteschalen (30) mit diesen voran in die Haltevertiefung (22) eindrückbar ist.

11. Dichtung nach Anspruch 10, dadurch gekennzeichnet, dass die Halteschalen (30) innen- und aussenseitige Haltevorsprünge (31, 32) tragen.

## Claims

1. Seal made of rubber or elastomer, especially a sealing frame for motor vehicle doors or hatches, wherein at least two longitudinally disposed seal portions having hollow chambers (7, 8) are connected by a transition part (6, 6') which is secured, with a self-substance connection, between the ends of the seal portions, characterised in that the transition part (6, 6') is constructed as a unilaterally open hollow shell made of rubber or elastomer, whose hollow space (16) is closed at the open side by a releasably arranged rigid cover (12, 12').

2. Seal according to claim 1, characterised in that the transition part (6, 6') is vulcanised on to the seal portion ends (4, 2), or is in situ moulded on, or adhesively attached.

3. Seal according to claims 1 and 2, characterised in that shape-locking holding elements for the cover (12, 12') are formed in the edge region (10, 11) of the opening (9, 9') of the transition part (6, 6'), and that the cover (12, 12') is snapped into the opening (9, 9') and may be fixed therein adhesively.

4. Seal according to claim 3, characterised in that the transition part (6, 6') has, at an edge region (10, 10') of the opening (9, 9'), a holding groove (15) and at the opposite edge region (11, 11') plug-in holes (19, 19'), that the cover (12, 12') has a flat edge portion (14), and projections (13) at the opposite edge, and that the projections (13) of the cover (12, 12') are, starting from the hollow space (16) of the transition part (6, 6'), plugged in an outward direction into the plug-in holes (19, 19'), and that the holding groove (15) is snapped over the flat edge portion (14).

5. Seal according to one of claims 1 to 4, which is arranged in the rebate of a door frame of a motor vehicle body, characterised in that the cover (12, 12') is arranged in that side of the transition part (6, 6') which abuts against the frame rebate (21) and may be secured thereto.

6. Seal according to one of claims 1 to 5, characterised in that the cover (12, 12') is made of a hard synthetic plastic material or of sheet metal.

7. Seal according to one of claims 1 to 6, the seal being provided with securing nipples insertable into holding holes in the frame rebate, characterised in that the securing nipples (27) are formed on the cover (12, 12') in the region of the extent of the transition part (6, 6').

8. Seal according to claim 7, characterised in that the securing nipples (27) are formed from the material of the cover (12, 12') and are made in one piece with the said cover.

9. Seal according to one of claims 1 to 8, characterised in that each securing nipple (27) is locked in the holding hole (22) by means of a collar-like retaining sleeve (28) which forms a lining, readily deformable before the pressing-in of the securing nipple (27), for the holding hole (22).

10. Seal according to claim 9, characterised in that the retaining sleeve (28) is moulded from a rigid synthetic plastic material, and comprises a bearing ring (29) with holding shells (30) formed thereon, between which shells spacings are provided in the circumferential direction of the retaining sleeve (28), and that the retaining sleeve (28) is adapted to be pressed into the holding hole (22) with the holding shells (30) foremost, the spacings between these holding shells being at least partly reduced as this pressing-in operation is carried out.

11. Seal according to claim 10, characterised in that the holding shells (30) comprise holding projections (31, 32) internally and externally.

## Revendications

1. Garniture d'étanchéité en caoutchouc ou en élastomère, en particulier encadrement d'étanchéité pour portes ou hayons de véhicules automobiles, dans lequel au moins deux segments de garniture (2, 4), présentant des chambres creuses (7, 8) qui s'étendent dans leur direction longitudinale, sont unis par une pièce de transition (6, 6') qui est fixée sans solution de continuité entre les extrémités des segments de garniture, caractérisée en ce que la pièce de transition (6, 6') est réalisée sous forme de cuvette creuse ouverte d'un côté en caoutchouc ou en élastomère, cuvette dont la cavité (16) est fermée, du côté ouvert, par un couvercle rigide (12, 12') qui est monté de façon amovible.

2. Garniture d'étanchéité selon la revendication 1, caractérisée en ce que la pièce de transition (6, 6') est fixée aux extrémités des segments (4, 2) par vulcanisation, injection in situ ou collage.

3. Garniture d'étanchéité selon la revendication 1 ou 2, caractérisée en ce que des moyens de retenue par emboîtement pour le couvercle (12, 12') sont formés dans la région bordante (10, 11) de l'ouverture (9, 9') de la pièce de transition (6, 6'), et en ce que le couvercle (12, 12') est emboîté et éventuellement collé dans l'ouverture (9, 9').

4. Garniture d'étanchéité selon la revendication 3, caractérisée en ce que la pièce de transition présente, au niveau d'une région bordante (10, 10') de l'ouverture (9, 9'), une gorge de retenue (15) et, au niveau de la région bordante opposée (11, 11'), des creux d'emboîtement (19, 19'), en ce que le couvercle (12, 12') présente un segment de bord plat (14) et, sur le bord opposé, des saillies (13), et en ce que les saillies (13) du couvercle (12, 12') sont emboîtées dans les creux d'emboîtement (19, 19') vers l'extérieur et la gorge de retenue (15) est emboîtée sur le segment de bord plat (14).

5. Garniture d'étanchéité selon l'une quelconque des revendications 1 à 4 qui est montée dans la feuillure d'un cadre de porte d'une carrosserie de véhicule automobile, caractérisée en ce que le couvercle (12, 12') est monté dans le côté de la pièce de transition (6, 6') qui est appliqué contre la feuillure du cadre (21) et est éventuellement fixé à celle-ci.

6. Garniture d'étanchéité selon l'une quelconque des revendications 1 à 5, caractérisée en ce que le couvercle (12, 12') est fait d'une matière plastique rigide ou de tôle.

7. Garniture d'étanchéité selon l'une quelconque des revendications 1 à 6, munie de mamelons de fixation qui peuvent être insérés dans des creux de retenue dans la feuillure du cadre, caractérisée en ce que les mamelons de fixation (27) sont formés sur le couvercle (12, 12') dans la région où s'étend la pièce de transition (6, 6').

8. Garniture d'étanchéité selon la revendication 7, caractérisée en ce que les mamelons de fixation (27) sont formés à partir du matériau du couvercle (12, 12') et d'une seule pièce avec celui-ci.

9. Garniture d'étanchéité selon l'une quelconque des revendications 1 à 8, caractérisée en ce que chaque mamelon de fixation (27) est encliqueté dans le creux de retenue (22) au moyen d'une douille d'encliquetage en forme de collerette (28) qui constitue, pour le creux de retenue (22), un revêtement facilement déformable avant l'enfoncement du mamelon de fixation (27).

10. Garniture d'étanchéité selon la revendication 9, caractérisée en ce que la douille d'encliquetage (28) est moulée à partir d'une matière plastique rigide et se compose d'une bague d'appui (29) sur laquelle sont formées des cuvettes de retenue (30) entre lesquelles sont ménagés des intervalles dans la direction circonférentielle de la douille d'encliquetage (28), et en ce que la douille d'encliquetage (28) peut être enfoncée dans le creux de retenue (22), cuvettes de retenue (30) en tête, avec réduction au moins partielle des distances entre celles-ci.

11. Garniture d'étanchéité selon la revendication 10, caractérisée en ce que les cuvettes de retenue (30) portent, sur le côté intérieur et sur le côté extérieur, des saillies de retenue (31, 32).

EP 0 245 594 B1

FIG 1

FIG 2

FIG 3

FIG 4

FIG 5